# EUROPEAN PATENT APPLICATION

(11) **EP 1 126 213 A1**
(43) Date of publication of application: **22.08.2001**
(21) Application number: 01301207.5
(22) Date of filing: 12.02.2001
(51) Int. Cl.: F21V 8/00

(54) **Illuminating device for a display**

(30) Priority: 16.02.2000 JP 2000037343
(71) Applicant: Citizen Electronics Co., Ltd., Fujiyoshida-shi, Yamanashi-ken (JP)
(72) Inventor: Hirayama, Yoshihisa, c/o Citizen Elect. Co., Ltd., Fujiyoshida-shi, Yamanashi-ken (JP); Tsuruta, Kenichi, c/o Citizen Electr. Co., Ltd., Fujiyoshida-shi, Yamanashi-ken (JP); Amano, Akira, c/o Citizen Electr. Co., Ltd., Fujiyoshida-shi, Yamanashi-ken (JP); Yamada, Tatsuro, c/o Citizen Electr. Co., Ltd., Fujiyoshida-shi, Yamanashi-ken (JP); Miyashita, Junji, c/o Citizen Electr. Co., Ltd., Fujiyoshida-shi, Yamanashi-ken (JP)
(74) Representative: Ben-Nathan, Laurence Albert

(57) **Abstract**

A light guide (1) is provided for illuminating a liquid crystal display (4) (LCD). The light guide (1) has a reflection surface (1a) for reflecting light from a light source (3) to the LCD (4). A reflection plate is provided adjacent to a rear side surface of the light guide (1) opposite to the light source (3). The reflection surface (1a) of the light guide (1) has saw-toothed grooves (1c). Each of the grooves comprises a front side (1f) having a small angle of elevation and a rear side (1g) having a large angle of elevation. The light emitted from the light source (3) passes through the light guide (1) and is reflected from the reflection plate (1a) and reflected from the rear sides to the LCD.

## Description

### BACKGROUND OF THE INVENTION

The present invention relates to a device for illuminating a display such as a liquid crystal display as a back light.

The liquid crystal display as a display device for a word processor, personal computer and others becomes thin in recent years.

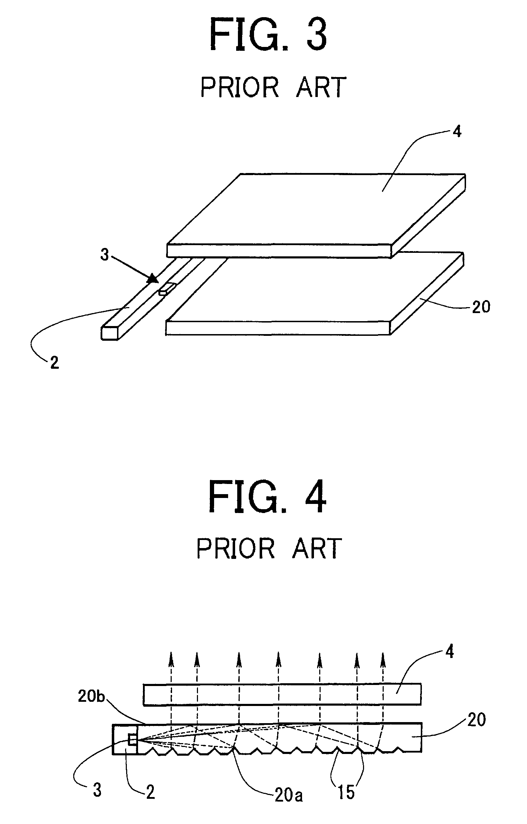

Fig. 3 is an exploded perspective view of a conventional liquid crystal display (hereinafter called LCD) having a back light device, Fig. 4 is a side view. The LCD comprises a display panel 4, a light guide 20 disposed under the display panel 4, and a circuit board 2 fixed to one of sides of the light guide 20. A light source 3 of LED is provided in the front side of the circuit board 2. The light guide 20 is made of transparent plastic, and has a light diffusing surface 20a at the underside thereof and a light discharge surface 20b opposite to the display panel 4. The light diffusing surface has a plurality of grooves or dots 15.

Light emitted from the light source 3 enters the light guide 20. Light beams reflected from grooves 15 discharge from the light discharge surface 20b, and a light beam reflected from the inner surface of the light discharge surface 20b reflects from the embossed surface inside the groove 15 and discharges from the discharge surface 20b. Discharged light enters the display panel 4 to illuminate the panel. In order to equalize the brightness of the display panel 4, the sectional shape and density of the groove or dot are adjusted.

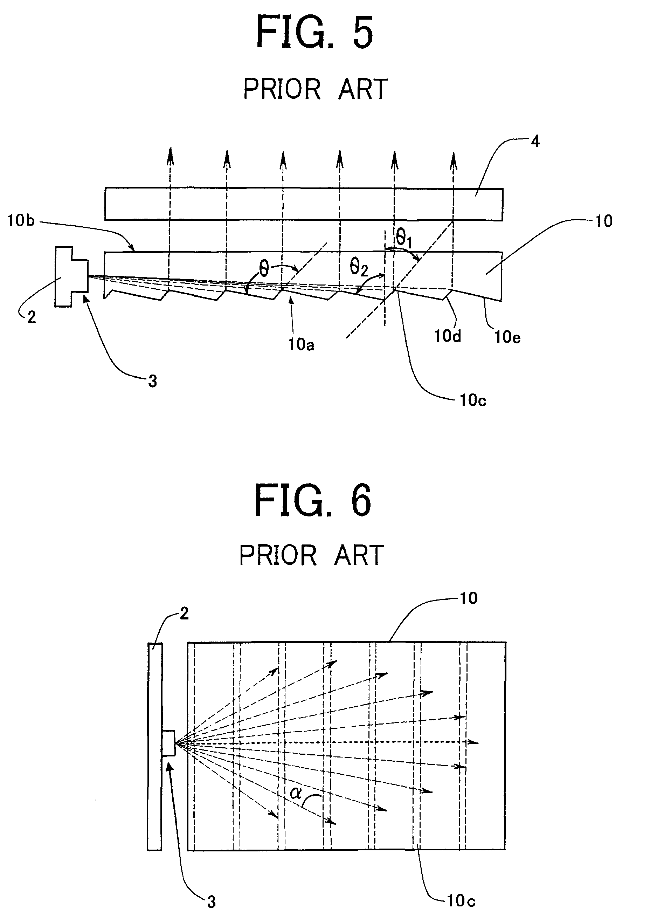

Figs. 5 and 6 show another conventional LCD. A light guide 10 is made of transparent plastic, and has a light diffusing surface 10a and a light discharge surface 10b. There is provided a plurality of grooves 10c on the light diffusing surface 10a. As shown in Fig. 5, each groove 10c has a scalene triangle in section, and is arranged at right angles with the center beam from the light source 3 as shown in Fig. 6. The grooves are arranged at a predetermined distance. Each groove 10c comprises a front side 10d having a short length and a rear side 10e having a long length, so that an included angle θ is formed. The included angle θ comprises a first angle θ₁ of inclination of the front side 10d and a second angle θ₂ of inclination of the rear side 10e.

Light beams from the light source 3 are reflected from the front side 10d. By setting the first angle θ₁ to about 45 degrees, the light is upwardly reflected and enters the display panel 4.

Referring to Fig. 6, the light makes an angle α with the extending line of the groove 10c. The center light having the angle α of 90 degree discharges at a maximum brightness since the light discharges from the light discharge surface 10b at 90 degrees.

Consequently, the display panel 4 has a partial highly bright portion, and hence the display reduces in quality. In addition, if the thickness of the light guide is reduced, the quantity of light decreases as the distance from the light source becomes large. Therefore, the brightness of the display panel decreases toward the end of the panel.

### SUMMARY OF THE INVENTION

An object of the present invention is to provide a device which may equally illuminate a display.

According to the present invention, there is provided an illuminating device for a display comprising a display panel, a light guide having a light reflection surface, a light discharge surface opposite to the light reflection surface, a front side surface, and a rear side surface, and disposed under the display panel so that the light discharge surface opposes to the display panel, a light source provided to oppose to the front side surface of the light guide, a plurality of triangular grooves formed in the light reflection surface, each of the triangular grooves comprising a front side having a first angle of inclination and a rear side having a second angle of inclination which is smaller than the first angle, and a diffusion and reflection plate disposed to oppose to the rear side surface and the light guide.

The second angle of inclination is about 45 degrees.

Each of the grooves extends in a right angle direction with a central beam from the light source.

The grooves are formed same depth.

These and other objects and features of the present invention will become more apparent from the following detailed description with reference to the accompanying drawings.

### BRIEF DESCRIPTION OF DRAWINGS

Fig. 1 is a side view of a liquid crystal display employed with an illuminating device according to the present invention;
Fig. 2 is a plan view of the display;
Fig. 3 is an exploded perspective view of a conventional LCD;
Fig. 4 is a side view of the LCD;
Fig. 5 is a side view of another conventional LCD; and
Fig. 6 is a plan view of the LCD.

### DETAILED DESCRIPTION OF THE PREFERRED EMBODIMENT

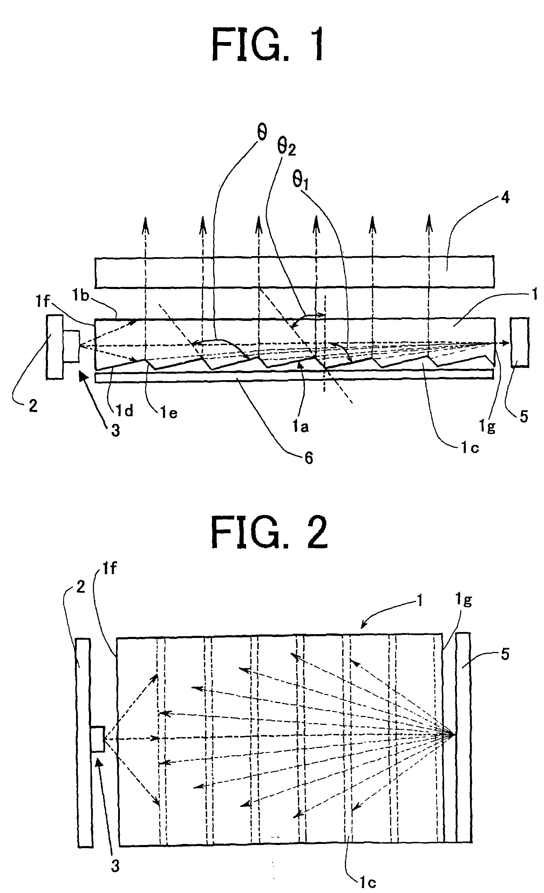

Referring to Figs. 1 and 2, the display panel 4 is the LCD, and the light source is the LED. A light guide 1 of the present invention is made of transparent plastic and formed into a rectangular parallelepiped, and has a light reflection surface la, a light discharge surface 1b opposite to the light reflection surface la, a front side surface If and a rear side surface 1g. There is formed a plurality of grooves 1c on the light reflection surface la. The grooves 1c are formed into the same depth, thereby to form a saw-toothed shape. Each groove 1c extends the whole width of the light guide and has a scalene triangle in section. The grooves are arranged at right angle with the center beam from the light source 3, and disposed at a predetermined distance. The groove 1c comprises a front side 1d having a long length, and a rear side le having a short length, whereby an included angle θ is formed. The inclined angle θ comprises a first angle θ₁ of inclination of the front side 1d and a second angle θ₂ of inclination of the rear side le. The second angle θ₂ has about 45 degrees.

A diffusion and reflection plate 5 made of transparent plastic is provided to oppose to the rear side surface 1g of the light guide 1 with a gap therebetween so as to receive light beams discharging from the rear side surface 1g. The rear side surface of the diffusion and reflection plate 5 is coated with a material having a high diffusion and reflection rate such as a titanium white. The coating is formed, for example, by dot printing such as screen printing of a pigment or printing ink including the titanium white so as to diffuse and reflect the light from the rear side surface 1g. A reflection plate 6 made of white plastic is provided under the light guide 1.

Light beams emitted from the light source 3 disposed adjacent the front side surface 1f enter the light guide 1. Since the angle of elevation of the front side 1d is small (90° - θ₁), most of light reflected from the front side 1d is re-reflected from the inside surface of the discharge surface 1b, and a small quantity of light discharges from the discharge surface 1b as primary light. Hence, most of light beams discharge from the rear side surface 1g and are diffused and reflected from the diffusion and reflection plate 5. The reflected light enters the light guide 1 from the rear side surface lg. The re-entered light is reflected from the rear side le. Since the angle elevation of the rear side le is about 45° (90° - θ₁), the light discharges from the discharge surface 1b at right angle as secondary light.

For convenience of illustration of Figs. 1 and 2, light beams from the light source 3 are indicated by only most outer beams and the central beam, and light beams from the diffusion and reflection plate 5 are indicated by only beams from the center of the plate 5.

Thus, the light illuminating the display panel 4 is mixture of the primary light reflected from the front side 1d and the secondary light reflected from the rear side le. Therefore, it is possible to equalize the brightness of the display panel 4 by adjusting the mixing ratio of the primary light and the secondary light. The mixing ratio can be adjusted by changing the first angle *θ*₁ and the second angle θ₂, by changing the distance between grooves or the depth of the groove.

While the invention has been described in conjunction with preferred specific embodiment thereof, it will be understood that this description is intended to illustrate and not limit the scope of the invention, which is defined by the following claims.

## Claims

1. An illuminating device for a display comprising:
a display panel;
a light guide having a light reflection surface, a light discharge surface opposite to the light reflection surface, a front side surface, and a rear side surface, and disposed under the display panel so that the light discharge surface opposes to the display panel;
a light source provided to oppose to the front side surface of the light guide;
a plurality of triangular grooves formed in the light reflection surface,
each of the triangular grooves comprising a front side having a first angle of inclination and a rear side having a second angle of inclination which is smaller than the first angle; and
a diffusion and reflection plate disposed to oppose to the rear side surface of the light guide.

2. The device according to claim 1 further comprising a reflection plate disposed to oppose to the light reflection surface.

3. The device according to claim 1 wherein the second angle of inclination is about 45 degrees.

4. The device according to claim 1 wherein each of the grooves extends in a right angle direction with a central beam from the light source.

5. The device according to claim 1 wherein the grooves are formed same depth.

6. The device according to claim 4 wherein the grooves are arranged at a same distance.
